# EUROPÄISCHE PATENTSCHRIFT

(11) **EP 2 279 363 B1**
(45) Veröffentlichungstag und Bekanntmachung des Hinweises auf die Patenterteilung: **01.08.2012**
(21) Anmeldenummer: 09749671.5
(22) Anmeldetag: 23.03.2009
(51) Int. Cl.: F16H 61/66, B60K 28/16, F16H 37/08

(54) **VERFAHREN ZUR SCHLUPFREGELUNG BEI EINEM SCHLEPPERFAHRZEUG ODER DERGLEICHEN**
METHOD FOR CONTROLLING SLIP IN A TRACTOR VEHICLE OR THE LIKE
PROCÉDÉ DE RÉGULATION ANTIPATINAGE SUR UN VÉHICULE TRACTEUR OU ANALOGUE

(30) Priorität: 20.05.2008 DE 102008001879
(43) Veröffentlichungstag der Anmeldung: 02.02.2011
(73) Patentinhaber: ZF Friedrichshafen AG, 88038 Friedrichshafen (DE)
(72) Erfinder: BAILLY, Gerhard, 88046 Friedrichshafen (DE); POHLENZ, Jürgen, 88214 Ravensburg (DE)
(86) Internationale Anmeldenummer: PCT/EP2009/053353
(87) Internationale Veröffentlichungsnummer: WO 2009/141181

(56) Entgegenhaltungen:
- EP-A- 1 857 714
- WO-A-00/43695
- WO-A-2004/098940
- WO-A-2006/079662
- DE-C1- 10 219 270
- VAHABZADEH H ET AL: "Split-torque, geared-neutral infinitely Variable Transmission mechanism" INTERNATIONAL AUTOMOBILE TECHNICAL CONGRESS, XX, XX, 7. Mai 1990 (1990-05-07), Seiten 687-695, XP002129345

## Beschreibung

Die Erfindung betrifft ein Verfahren zur Schlupfregelung bei einem Schlepperfahrzeug oder dergleichen gemäß dem Oberbegriff des Patentanspruchs 1 sowie eine Einrichtung zur Durchführung dieses Verfahrens gemäß dem Oberbegriff des Patentanspruchs 7.

Unter dem Begriff "Schlepperfahrzeug oder dergleichen" sind hier allgemein Arbeitsfahrzeuge zu verstehen, bei denen während ihres Arbeitseinsatzes hohe Vortriebskräfte über den Kontakt zur Fahrbahnoberfläche aufgebaut werden müssen, um eine hohe Schub- oder Zugkraft zu erzeugen. Als Beispiele seien etwa Ackerschlepper genannt, die einen Pflug schleppen, oder Schaufellader, die eine Ladeschaufel in ein Ladegut schieben, um dieses aufzunehmen. Charakteristisch für derartige Arbeitsvorgänge ist, dass sie bei kleinen Fahrzeuggeschwindigkeiten stattfinden und vom Fahrer über die Steuerung des Vortriebes gesteuert werden. Die Steuerung des Vortriebes erfolgt bei bekannten Arbeitsfahrzeugen beispielsweise über eine Steuerung des Anpressdruckes bei einer Rutschkupplung, über die Vorgabe einer Differenzdrehzahl an einem hydraulischen Drehmomentwandler oder auch über ein anderes, meist durch den Fahrer beeinflussbares, drehmomentbegrenzendes Element im Antriebsstrang.

Die Vortriebskräfte des Fahrzeuges werden über den Reifenkontakt zur Fahrbahn aufgebaut. Sie hängen ab von der Normalkraft Fₙ am jeweiligen Antriebsrad und dem Reibungskoeffizienten µ zwischen Reifen und Fahrbahn. Dabei ist der Reibungskoeffizient µ in besonderer Weise für die zwischen Reifen und Fahrbahn übertragbaren Kräfte verantwortlich. Der Reibungskoeffizient selbst hängt außer von der jeweiligen Materialpaarung (Reifen/Fahrbahn) auch von dem am Rad auftretenden Schlupf, also dem Verhältnis zwischen der realen Geschwindigkeit des Fahrzeuges über Grund und der theoretischen Geschwindigkeit aufgrund der Raddrehzahl ab. Die bekannten µ-Schlupfkurven lassen erkennen, dass der µ-Wert mit zunehmendem Schlupf zunächst steil ansteigt und ein Maximum aufbaut, und anschließend wieder in einem flachen Verlauf abfällt. Daraus ergibt sich, dass ein Schlupf erforderlich ist, um eine Vortriebskraft zu erzeugen. Der Abfall des µ-Wertes nach dem Maximum führt dazu, dass das nicht an die Fahrbahn übertragene überschüssige Antriebsmoment eine zunehmende, ungewollte Beschleunigung, d.h. ein Durchdrehen des Rades verursacht, was zu einem zunehmenden Verschleiß des Reifens und/oder zu einer Beschädigung der Fahrbahn führt.

Ein Verfahren zur Schlupfregelung gemäß dem Oberbegriff des Patentanspruchs 1 sowie eine Einrichtung gemäß dem Oberbegriff des Patentanspruchs 7 sind aus der DE 102 19 270 C1 bekannt. Sie finden Anwendung bei einem landwirtschaftlichen Nutzfahrzeug, welches beispielsweise ein landwirtschaftliches Gerät schleppt. Dabei sind Einrichtungen vorgesehen, die den Antriebsräder-Schlupf ermitteln und bei einer Abweichung des Ist-Schlupfes von einem vorgegebenen Soll-Schlupf das Antriebsmoment durch Einstellung einer bestimmten Kombination von Motordrehzahl und Getriebeübersetzung im Sinne einer Schlupfoptimierung regeln. Ein Nachteil des bekannten Verfahrens bzw. der bekannten Einrichtung wird darin gesehen, dass bei diesem Regelvorgang durch eine Veränderung der Motordrehzahl auch das Antriebsmoment verändert wird, so dass unter Umständen die zur Durchführung der vorgesehenen Arbeit erforderliche Leistung nicht mehr zur Verfügung steht.

Der vorliegenden Erfindung liegt daher die Aufgabe zugrunde, ein Verfahren zu schaffen, das es erlaubt, beim Arbeitsvorgang (vor allem bei kleinen Fahrgeschwindigkeiten von weniger als 10 km/h) Zugkräfte bis zum maximal erreichbaren, durch die installierte Leistung vorgegebenen Wert zu erzeugen, wobei ein unkontrollierter Schlupfanstieg infolge Durchdrehens des Rades bzw. der Räder verhindert werden soll.

Die Lösung dieser Aufgabe ergibt sich aus den Merkmalen des Patentanspruchs 1, während vorteilhafte Ausgestaltungen und Weiterbildungen der Erfindung den jeweils zugeordneten Unteransprüchen entnehmbar sind.

Der Erfindung liegt die Erkenntnis zugrunde, dass eine optimale Schlupfregelung nur dann zu erzielen ist, wenn die Drehzahl der Antriebsräder ohne Einbußen am maximal möglichen Antriebsmoment bzw. der Antriebsleistung regelbar ist.

Demnach geht die Erfindung aus von einem Verfahren zur Schlupfregelung bei einem Schlepperfahrzeug oder dergleichen, bei welchem der Antriebsräder-Schlupf ermittelt und bei einer Abweichung des Ist-Schlupfes von einem vorgegebenen Soll-Schlupf die Übersetzung eines im Antriebsstrang angeordneten regelbaren Getriebes im Sinne einer Schlupfoptimierung geregelt wird, bzw. von einer Einrichtung zur Durchführung dieses Verfahrens, mit einem im Antriebsstrang angeordneten regelbaren Getriebe, umfassend Mittel zum Ermitteln des Antriebsräder-Schlupfes und Mittel zum Regeln der Getriebeübersetzung im Sinne einer Schlupfoptimierung.

Zur Lösung der gestellten Aufgabe ist dabei vorgesehen, dass die Getriebeübersetzung mittels eines Geared-Neutral-Verfahrens geregelt wird, wobei das Getriebe als Geared-Neutral-Getriebe ausgebildet ist.

Geared-Neutral-Getriebe sind an sich bekannt. Charakteristisch für derartige Getriebe ist, dass die Getriebeübersetzung völlig unabhängig von der vom Antriebsrad auf die Fahrbahn zu übertragenden Leistung zwischen einer durch die Getriebeauslegung vorgegebenen höchsten Abtriebsdrehzahl bis hin zu kleinsten Abtriebsdrehzahlen und gegebenenfalls sogar bis zu einer Abtriebsdrehzahl = Null (und gegebenenfalls sogar zu einer entgegengesetzten Abtriebsdrehrichtung) regeln lässt. Damit lässt sich die für Schlepperfahrzeuge der oben definierten Art typische Aufgabe, bei kleinen Fahrgeschwindigkeiten (z.B. < 10 km/h) Zug- oder Schubkräfte bis zum maximal erreichbaren Wert aufzubringen und gleichzeitig einen unkontrollierten Schlupfanstieg infolge eines Durchdrehens der Antriebsräder zu verhindern, in optimaler Weise lösen.

Geared-Neutral-Getriebe beruhen auf dem Prinzip, dass die Getriebeeingangsleistung über ein Verzweigungsgetriebe verzweigt und die beiden Leistungszweige über ein spezielles Summiergetriebe wieder zusammengeführt werden, wobei die Drehzahl eines ersten Leistungszweiges beispielsweise über ein Variatorgetriebe stufenlos so verändert werden kann, dass die Summe der Drehzahlen beider Leistungszweige, also die Ausgangsdrehzahl, einen äußerst kleinen Wert annimmt (gegebenenfalls bis zu einem Wert Null und bis zu einer Drehrichtungsumkehr). Das Summiergetriebe ist beispielsweise durch ein Planetenradgetriebe gebildet, dessen Steg mit einem Leistungszweig, dessen Sonnenrad mit dem anderen Leistungszweig und dessen Ausgang mit dem Hohlrad verbunden sind.

Ein Verfahren bzw. eine Einrichtung der erfindungsgemäßen Art erlauben über das Geared-Neutral-Getriebe eine genaue Einstellung kleinster Abtriebs- und damit Antriebsraddrehzahlen unabhängig von der Abtriebslast, d.h. dem vorliegenden Reibschluss zwischen Antriebsrädern und Fahrbahn. Die Antriebsraddrehzahl ist zudem von der verfügbaren Motorleistung entkoppelt. Dadurch ist ein ungewolltes Durchdrehen der Antriebsräder aufgrund eines geringer werdenden Reibwertes zwischen Antriebsrädern und Fahrbahn auch bei hohem Abtriebsmoment am Antriebsrad nahe einem Stillstand des Fahrzeugs nicht möglich.

Gemäß einer bevorzugten Ausgestaltung des erfindungsgemäßen Verfahrens ist vorgesehen, dass der Antriebsräder-Schlupf mittels einer gleichzeitigen Erfassung der Antriebsräder-Drehzahl und der tatsächlichen Fahrgeschwindigkeit des Fahrzeugs über Grund sowie mittels eines Vergleiches der erfassten Werte ermittelt wird. Der Antriebsräder-Schlupf wird üblicherweise als prozentuales Verhältnis von Schlupfgeschwindigkeit (d.h. Relativgeschwindigkeit eines Reifenprofilelementes über Grund) und der Absolutgeschwindigkeit des Fahrzeuges angegeben. Wie weiter vorne bereits dargelegt wurde, ist Schlupf erforderlich, um eine Zugkraft aufzubauen. Der Zusammenhang von Schlupf und der erreichbaren Zugkraft, also dem Reibwert µ zwischen Antriebsrädern und Fahrbahn, wird weiter hinten anhand einer qualitativen Darstellung näher erläutert.

Die tatsächliche Fahrgeschwindigkeit des Fahrzeuges über Grund wird gemäß einer weiteren Ausgestaltung der Erfindung mittels eines am Fahrzeug angeordneten Radarsystems oder Lasersystems oder mittels Bezugspunkte außerhalb des Fahrzeuges (Sender/Empfänger; sattelitengestütztes Positionsbestimmungssystem GPS) ermittelt, wie an sich bereits bekannt ist.

Wie weiter vorne dargelegt wurde, wird die Getriebeübersetzung im Sinne einer Schlupfoptimierung geregelt. Das Optimierungsziel kann je nach Aufgabenstellung unterschiedlich sein. Gemäß der Erfindung wird eine Schlupfoptimierung im Sinne einer maximalen Zugkraft eingeregelt.

Ein anderes Optimierungsziel kann sein, dass eine Schlupfoptimierung im Sinne einer vorgegebenen Bodenschonung eingeregelt wird.

Es kann auch sinnvoll sein, einen Schlupf in einem bestimmten Schlupfbereich, beispielsweise zwischen einem Punkt maximaler Zugkraft und einem Punkt maximaler Bodenschonung zuzulassen und die Schlupfregelung so auszulegen, dass der Schlupf Werte aufweist, die sich in dem vorgegebenen optimalen Schlupfbereich befinden.

Die Erfindung sieht vor, dass der Fahrer des Fahrzeuges die Möglichkeit hat, über ein Bediensystem das Optimierungsziel zu wählen bzw. einen maximal zulässigen Schlupf am Antriebsrad vorzugeben.

Bei Verwendung der erfindungsgemäßen Einrichtung kann der Fahrer die Vortriebsbewegung des Fahrzeuges auch bei kleinster Fahrgeschwindigkeit ausschließlich über ein geeignetes, beispielsweise den vorne genannten Variator steuerndes Fahrpedal oder dergleichen kontrollieren, so dass er von einer Kontrolle des Abtriebsmomentes, beispielsweise über ein Kupplungspedal oder die Vorgabe einer Motordrehzahl, die beispielsweise einer Drehzahldifferenz an einem hydraulischen Wandler entspricht, entbunden ist. Weiterhin entfällt die Notwendigkeit, einen Antriebsräder-Schlupf durch eine Beobachtung der Radbewegung relativ zur Fahrbahnoberfläche zu erkennen und zu kontrollieren. Dies ist insbesondere bei wechselnder Oberflächenbeschaffenheit von Vorteil.

Grundsätzlich ist eine Schlupfüberwachung und Schlupfregelung gemäß der vorliegenden Erfindung auch bei höheren Fahrgeschwindigkeiten nach dem gleichen Prinzip möglich. Ziel der vorliegenden Erfindung ist jedoch eine Anwendung bei niedrigen Geschwindigkeiten, da sich hier die Vorteile des Geared-Neutral-Getriebes durch exakte die Einstellung der Abtriebsdrehzahlen optimal nutzen lassen. Im Vergleich zu konventionellen Antriebssträngen mit Kupplungen, integrierten hydraulischen Wandlern oder hydrostatischen Antrieben ergeben sich im Sinne der Aufgabenstellung jedoch deutliche Vorteile in der Antriebsstrangsteuerung im unteren Geschwindigkeitsbereich eines Fahrzeugs.

Die Erfindung lässt sich anhand der beigefügten Zeichnung noch genauer erläutern. In dieser zeigt
- Fig. 1: in qualitativer Darstellung ein Reibwert-Schlupf-Diagramm, und
- Fig. 2: ein Diagramm entsprechend der Fig. 1, wobei zusätzlich als Optimierungsziele gewählte Schlupfpunkte bzw. ein Schlupfbereich angegeben sind.

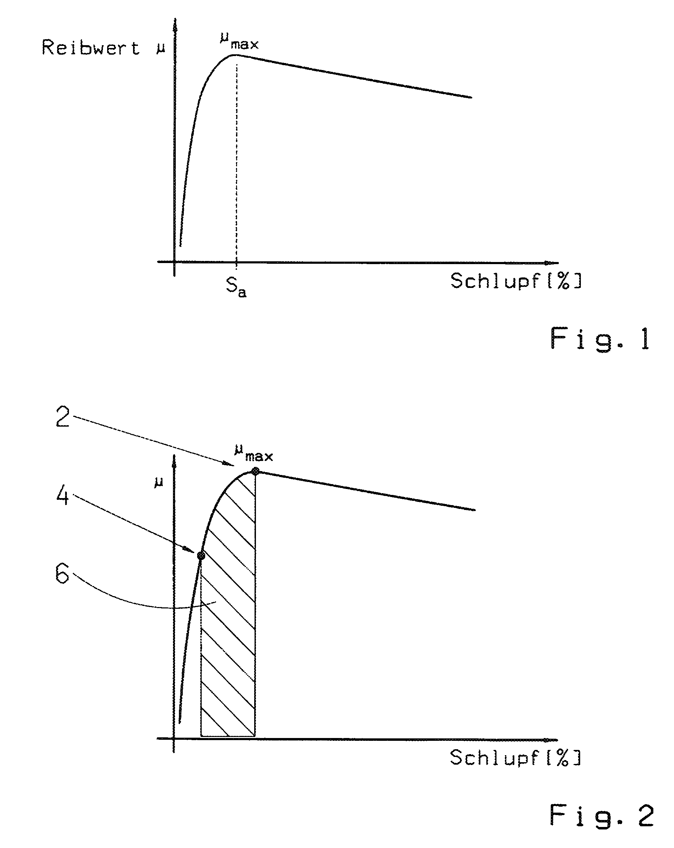

Fig. 1 zeigt den Verlauf des Reibwertes µ in Abhängigkeit vom Schlupf, der, wie bereits erwähnt, als prozentuales Verhältnis von Schlupfgeschwindigkeit und Absolutgeschwindigkeit des Fahrzeuges angegeben ist. Der Reibwert µ ist das Verhältnis der vom Antriebsrad übertragenen Antriebskraft Fₓ zu der auf das Antriebsrad wirkenden Normalkraft Fₙ, wie allgemein bekannt ist. Wie die Fig. 1 erkennen lässt, steigt der Reibwert µ mit zunehmendem Schlupf zunächst steil an, erreicht bei einem bestimmten Schlupf Sₐ seinen Maximalwert µₘₐₓ und fällt danach verhältnismäßig flach wieder ab. Es ist erkennbar, dass Schlupf notwendig ist, um eine Zugkraft aufzubauen. Als typisches Beispiel sei genannt, dass etwa bei einem Winterreifen der maximale Reibwert µ = µₘₐₓ bei Sₐ ~ 15 % erreicht wird, wobei bei trockener Fahrbahn µ ~ 1 und bei nasser Fahrbahn µ ~ 0,6 ist.

Fig. 2 zeigt eine Darstellung etwa gemäß der Fig. 1, wobei der mit 2 bezeichnete Betriebspunkt für eine maximale Zugkraft und der mit 4 bezeichnete Betriebspunkt für eine optimale Bodenschonung bei ausreichender Zugkraft durch Schlupfbegrenzung am Antriebrad steht. Der schraffierte Bereich stellt einen optimierten Schlupfbereich etwa zwischen dem Betriebspunkt 2 maximaler Zugkraft und dem Betriebspunkt 4 optimaler Bodenschonung dar. Der Fahrer kann je nach der gestellten Aufgabe wählen, ob eine maximale Zugkraft oder eine optimale Bodenschonung eingehalten werden soll, oder ob der Schlupf sich während des Arbeitsvorganges zwischen diesen Werten bewegen darf.

### Bezugszeichen

- 2: Punkt maximaler Zugkraft
- 4: Punkt optimaler Bodenschonung
- 6: Schlupfbereich
- µ: Reibwert
- Fₙ: Normalkraft
- Fₓ: Antriebskraft
- Sₐ: Schlupf bei maximalem Reibwert

## Patentansprüche

1. Verfahren zur Schlupfregelung bei einem Schlepperfahrzeug oder dergleichen, bei welchem ein Antriebsräder-ist-Schlupf ermittelt wird wobei der Antriebsräder-ist-Schlupf mittels einer gleichzeitigen Erfassung einer Antriebsräder-Drehzahl und einer tatsächlichen Fahrgeschwindigkeit des Fahrzeuges über Grund sowie über einen Vergleich der erfassten Werte ermittelt wird und bei. einer Abweichung des Ist-Schlupfes von einem vorgegebenen Soll-Schlupf eine Getriebeübersetzung eines in einem Antriebsstrang angeordneten regelbaren Getriebes im Sinne einer Schlupfoptimierung geregelt wird, und über ein Bediensystem ein Optimierungsziel vom Fahrer des Fahrzeugs wählbar ist, **dadurch gekennzeichnet, dass** die Getriebeübersetzung mittels eines Geared-Neutral-Verfahrens geregelt wird, bei welchem eine Getriebeeingangsleistung über ein Verzweigungsgetriebe auf einen ersten und einen zweiten Leistungszweig verzweigt und die beiden Leistungszweige über ein spezielles Summiergetriebe wieder zusammengeführt werden, wobei eine Drehzahl des ersten Leistungszweiges stufenlos verändert wird, wodurch eine Summe der Drehzahlen beider Leistungszweige, also eine Ausgangsdrehzahl sich verändert, wobei die Ausgangsdrehzahl einen äußerst kleinen Wert, gegebenenfalls bis zu einem Wert Null, annehmen kann, wobei das wählbare Optimierungsziel entweder eine Schlupfoptimierung im Sinne einer maximalen Zugkraft (2), eine Schlupfoptimierung im Sinne einer vorgegebenen Bodenschonung (4) oder eine Schlupfregelung auf Werte in einem Bereich (6) zwischen einem Punkt maximaler Zugkraft und einem Punkt maximaler Bodenschonung ist.

2. Verfahren nach Anspruch 1, **dadurch gekennzeichnet , dass** die tatsächliche Fahrgeschwindigkeit über Grund mittels eines am Fahrzeug angeordneten Radarsystems oder Lasersystems und mittels Bezugspunkte außerhalb des Fahrzeuges (Sender/Empfänger; Navigationssystem; GPS) ermittelt wird.

3. Verfahren nach Anspruch 1, **dadurch gekennzeichnet, dass** eine Schlupfregelung in einem Schlupfbereich (6) zwischen einem jeweils vorgegebenen unteren und oberen Schlupfwert vorgesehen ist.

## Claims

1. Method for controlling slip in a tractor vehicle or the like, in which an actual slip of the driven wheels is determined, wherein the actual slip of the driven wheels is determined by means of simultaneous detection of a rotational speed of the driven wheels and of an actual velocity of the vehicle over ground and by means of a comparison of the detected values, and in the event of a deviation of the actual slip from a predefined setpoint slip a transmission ratio of an adjustable transmission which is arranged in a drive train is adjusted with the aim of optimizing the slip, and an optimization objective can be selected by the driver of the vehicle by means of an operator control system, **characterized in that** the transmission ratio is adjusted by means of a geared neutral method in which a transmission input power is branched between a first and a second power branch by means of a power-branching gearbox, and the two power branches are combined again by means of a special summing gearbox, wherein a rotational speed of the first power branch is changed in an infinitely variable fashion, as a result of which a sum of the rotational speeds of the two power branches, that is to say an output rotational speed, changes, wherein the output rotational speed can assume an extremely small value, if appropriate as far as a value of zero, wherein the selectable optimization objective comprises slip optimization with the aim of achieving maximum tractive force (2), slip optimization with the aim of achieving predefined protection (4) of the ground, or slip adjustment to values in a range (6) between a point of maximum tractive force and a point of maximum protection of the ground.

2. Method according to Claim 1, **characterized in that** the actual velocity over ground is determined by means of a radar system or laser system arranged on the vehicle and by means of reference points outside the vehicle (transmitter/receiver; navigation system; GPS).

3. Method according to Claim 1, **characterized in that** slip adjustment is provided in a slip range (6) between a respectively predefined lower slip value and a respectively predefined upper slip value.

## Revendications

1. Procédé de régulation antipatinage sur un véhicule tracteur ou analogue, dans lequel un patinage réel des roues motrices est calculé, le patinage réel des roues motrices étant calculé à l'aide d'une détection simultanée d'un nombre de tours des roues motrices et d'une vitesse effective du véhicule sur le sol ainsi que par le biais d'une comparaison des valeurs détectées et en cas d'écart du patinage réel par rapport à un patinage théorique prédéfini, une réduction de boîte de vitesses d'une boîte de vitesses réglable disposée dans une chaîne d'entraînement étant réglée dans le sens d'une optimisation du patinage et d'un objectif d'optimisation sélectionné par le conducteur du véhicule par le biais d'un système de commande, **caractérisé en ce que** la réduction de boîte de vitesses est réglée à l'aide d'un procédé d'engrenage neutre dans lequel une performance de boîte de vitesses est ramifiée en une première et une deuxième ramification de performance par le biais d'une boîte de vitesses à deux ramifications et que les deux ramifications de performance sont de nouveau rassemblées par le biais d'une boîte de vitesses totalisatrice spécifique, un nombre de tours de la première ramification de performance étant modifié de façon progressive, modifiant ainsi une somme des nombres de tours des deux ramifications de performance, donc un nombre de tours de sortie, le nombre de tours de sortie pouvant prendre une valeur extrêmement petite, le cas échéant une valeur nulle, l'objectif d'optimisation sélectionnable étant soit une optimisation du patinage allant dans le sens d'une force de traction maximale (2), une optimisation du patinage allant dans le sens d'un ménagement du sol prédéfini (4) ou une régulation antipatinage sur des valeurs comprises dans une plage (6) comprise entre un point de force de traction maximale et un point de ménagement du sol maximal.

2. Procédé selon la revendication 1, **caractérisé en ce que** la vitesse effective au sol est calculée à l'aide d'un système radar ou d'un système laser disposé sur le véhicule et est calculée à l'aide de points de référence placés à l'extérieur du véhicule (émetteur/récepteur ; système de navigation ; GPS).

3. Procédé selon la revendication 1, **caractérisé en ce qu'**une régulation antipatinage est prévue dans une plage de patinage (6) prévue entre des valeurs de patinage inférieure et supérieure respectivement prédéfinies.
